Europäisches Patentamt

European Patent Office

Office européen des brevets

(11) Publication number: **0 111 417**
**B1**

## (12) EUROPEAN PATENT SPECIFICATION

(45) Date of publication of patent specification: **23.04.86**

(21) Application number: **83307411.5**

(22) Date of filing: **06.12.83**

(51) Int. Cl.⁴: **B 25 J 15/00**

(54) Robot hand.

(30) Priority: **06.12.82 JP 183727/82**

(43) Date of publication of application:
**20.06.84 Bulletin 84/25**

(45) Publication of the grant of the patent:
**23.04.86 Bulletin 86/17**

(84) Designated Contracting States:
**DE FR GB**

(56) References cited:
**EP-A-0 062 070**
**DE-B-2 925 238**

**PATENT ABSTRACTS OF JAPAN, unexamined
applications; section M, vol. 3, no. 154,
December 18, 1979 THE PATENT OFFICE
JAPANESE GOVERNMENT page 62 M 85**

(73) Proprietor: **FANUC LTD
3580, Shibokusa Aza-Komanba Oshino-mura
Minamitsuru-gun Yamanashi 401-05 (JP)**

(72) Inventor: **Nakashima, Seiichiro
3-2, Hinohoncho 5-chome Hino
Tokyo (JP)**
Inventor: **Torii, Nobutoshi
Fuyo Heights No. 308 Takakuracho 65-4
Hachioji Tokyo (JP)**
Inventor: **Hamura, Masayuki
Tamadaira 3-27 Hino
Tokyo (JP)**

(74) Representative: **Brunner, Michael John et al
GILL JENNINGS & EVERY 53-64 Chancery Lane
London WC2A 1HN (GB)**

## Description

This invention relates to a robot hand which forms a component of an industrial robot and the function of which is to grip an object which is handled and/or carried by the industrial robot.

A hand of an industrial robot is required to be provided with at least two fingers and is also required to allow the fingers to take selectively three independent positions, namely (a) an open position at which the fingers are open to prepare for receipt of an object handled by the industrial robot, (b) a closed position at which the fingers are closed and firmly grip the object, and (c) a variable intermediate or neutral position into which the fingers can be temporarily positioned, the intermediate position lying between the open position and the closed position. The reason why a robot hand is required to take an intermediate position is to enable an industrial robot to be taught to cause its arm to move to a position in which the fingers contact each other at a position approximately centering an object which is to be handled by the robot, when a robot hand is preliminarily brought to a grip position (a position at which an object is positioned so as to be gripped by a robot hand) prior to commencement of a further operation. Incidentally, it is often important that the fingers are held apart from each other at an intermediate position, the distance apart of the fingers being adjustable. This means that there are times at which a sufficient gripping force cannot necessarily be expected from an intermediate position of the fingers, particularly with a small object.

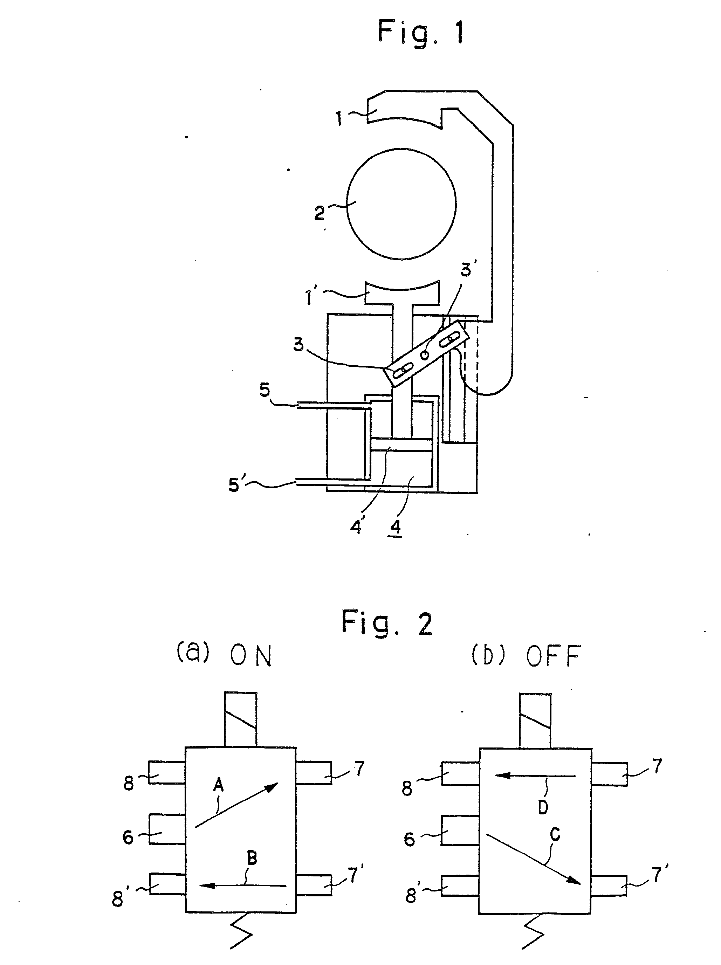

The fingers of a robot hand are preferably driven by a mechanism which comprises a double acting cylinder, an example of which, having two fingers, is shown in Fig. 1. Fingers 1 and 1' grip an object 2 which is handled and/or carried by an industrial robot. The fingers 1 and 1' are driven by a link 3 which tilts around a pivot point 3'. The link 3 is driven by a piston 4' which moves up and down in a double acting cylinder 4 which is supplied with working fluid through two inlets 5 and 5', either or each of which is selectively connected with a working fluid pressure source (not shown).

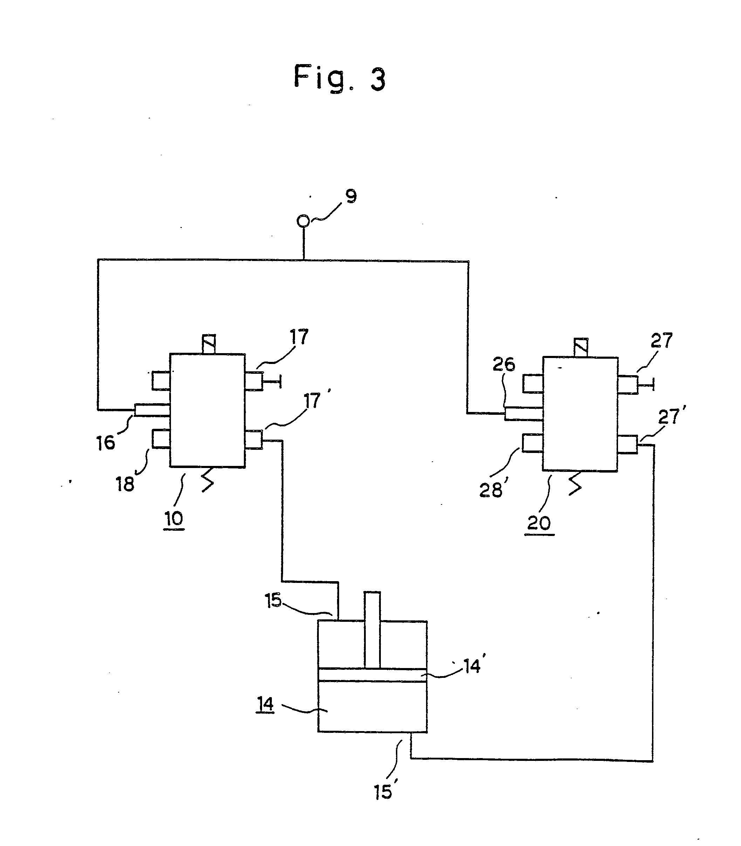

Working fluid is preferably supplied to the double acting cylinder 4 through one or more electromagnetic valves, more specifically through two independent 2-position, 5-port type signal solenoid electromagnetic valves. A 2-position, 5-port type single solenoid electromagnetic valve, of which one example is shown in Fig. 2(a) and (b), is defined as an electromagnetic valve which comprises (a) an inlet 6 through which a working fluid (air, oil etc) is supplied to the valve, (b) two outlets 7 and 7' each of which is, in response to the ON or OFF position of the solenoid of the valve, selectively connectable with the inlet 6 through a path formed in the valve, (c) two vent parts 8 and 8' each of which is connectable with a respective one of the outlets 7 and 7', which is not at the time connected to the inlet 6, through a path formed in the valve. The connection of the fluid paths is switched in response to the ON or OFF position of the solenoid of the valve. Such a 2-position, 5-port type single solenoid electromagnetic valve may have two independent functional positions adopted in response to the ON or OFF position of a solenoid as shown respectively in Figs. 2 (a) and (b). In a first position the inlet 6 and the outlet 7 are connected as shown by arrow A and the outlet 7' and the vent port 8' are connected as shown by arrow B in response to the solenoid being ON and in a second position the inlet 6 and the outlet 7' are connected as shown by arrow C and the outlet 7 and the vent port 8 are connected as shown by arrow D in response to the solenoid being OFF.

In the prior art, it is known to connect two independent 2-position, 5-port type single solenoid electromagnetic valves with a double acting cylinder as shown in Fig. 3 in order to constitute a drive means for a robot hand which enables the hand to take an intermediate position. Referring to Figure 3, an inlet 15 of a double acting cylinder 14 is connected with an outlet 17' of a first electromagnetic valve 10, and an inlet 15' of the double acting cylinder 14 is connected with an outlet 27' of a second electromagnetic valve 20. These outlets 17' and 27' of the first and second electromagnetic valves 10 and 20 are connectable respectively with an inlet 16 of the first electromagnetic valve 10 and with an inlet 26 of the second electromagnetic valve 20 in response to the OFF position of the solenoids thereof (see Fig. 2 (b)). In this position the inlet 15 of the double acting cylinder 14 is connected with a working fluid pressure source 9 through the valve 10, and the inlet 15' is connected with the source 9 through the second electromagnetic valve 20, thus supplying working pressure to both chambers of the double acting cylinder 14. In contrast, in the ON position of the solenoids the outlet 17' is connected with a vent port 18' and the outlet 27' is connected with a vent port 28', reducing the internal pressure in both chambers of the double acting cylinder 14 to zero. The other outlets 17 and 27 are plugged to prevent the source 9 from being connected directly with the atmosphere.

The fingers of a robot hand are opened or closed by switching the solenoid of one electromagnetic valve ON or OFF and the solenoid of the other electromagnetic valve OFF or ON respectively, thus driving a piston 14' of the double acting cylinder 14 up or down in the figure. In contrast, the fingers are brought to and maintained at an intermediate position by switching the solenoids of the both electromagnetic valves 10 and 20 OFF to supply pressure to both chambers of the double acting cylinder 14, driving the piston 14' toward the middle part of the double acting cylinder 14 and holding the piston 14' at a location arbitrarily located between the open and closed position.

Such a robot hand has the drawback that a termination of electric power supply brings the robot hand to an intermediate position in which the gripping force of the fingers of the robot hand is not necessarily sufficient, particularly for a small object, possibly causing the robot hand to fail to keep holding an object. Such a robot hand thus does not satisfy the requirement that the fingers of a robot hand always continue to hold an object safely by shifting to a safer position in response to a termination of electric power supply.

An object of this invention is to provide a robot hand which is driven by a double acting cylinder supplied with a working fluid through two independent 2-position, 5-port type single solenoid electromagnetic valves, so that the fingers thereof are caused to close in response to a termination of electric power supply, thereby enabling the robot hand to continue gripping an object which is being held (regardless of its size), thus removing the possibility that a robot hand fails to keep holding the object.

To achieve the aforementioned object, according to the invention, a robot hand has a plurality of fingers driven by a double acting cylinder, a first chamber of which is pressurized to open the fingers and a second chamber of which is pressurized to close the fingers, the cylinder being supplied with working fluid through two independent 2-position 5-port type single solenoid electromagnetic valves, and a working fluid pressure source connected with the inlets of the first and second electromagnetic valves, and is characterized in that an outlet of a first of the electromagnetic valves which is connected with the inlet thereof when its solenoid is in the ON position, is connected with the inlet of a first chamber of the double acting cylinder; an outlet of the second of the electromagnetic valves which is connected with the inlet thereof when its solenoid is in the OFF position, is connected with the second chamber of the double acting cylinder; an outlet of the first electromagnetic valve, which is connected with the inlet thereof when its solenoid is in the OFF position, is closed; and in that an outlet of the second electromagnetic valve, which is connected with the inlet thereof when its solenoid is in the ON position, is closed.

One example of a robot hand according to the invention will now be described with reference to the accompanying drawings, in which:—

Fig. 1 is a schematic drawing of a robot hand which has two fingers driven by a double acting cylinder;

Fig. 2 (a) and (b) are schematic drawings of a 2-position, 5-port type single solenoid electromagnetic valve, showing the functional positions thereof taken respectively in response to the ON and OFF positions of the solenoid thereof;

Fig. 3 is a diagram showing the interconnection of a working fluid pressure source, two independent 2-position, 5-port type single solenoid electromagnetic valves and a double acting cylinder, which in combination constitute a drive means for a prior art robot hand; and,

Fig. 4 is a schematic drawing of a robot hand which has two fingers driven by a double acting cylinder to which working liquid pressure is supplied through two independent 2-position, 5-port type single solenoid electromagnetic valves arranged in accordance with one embodiment of this invention.

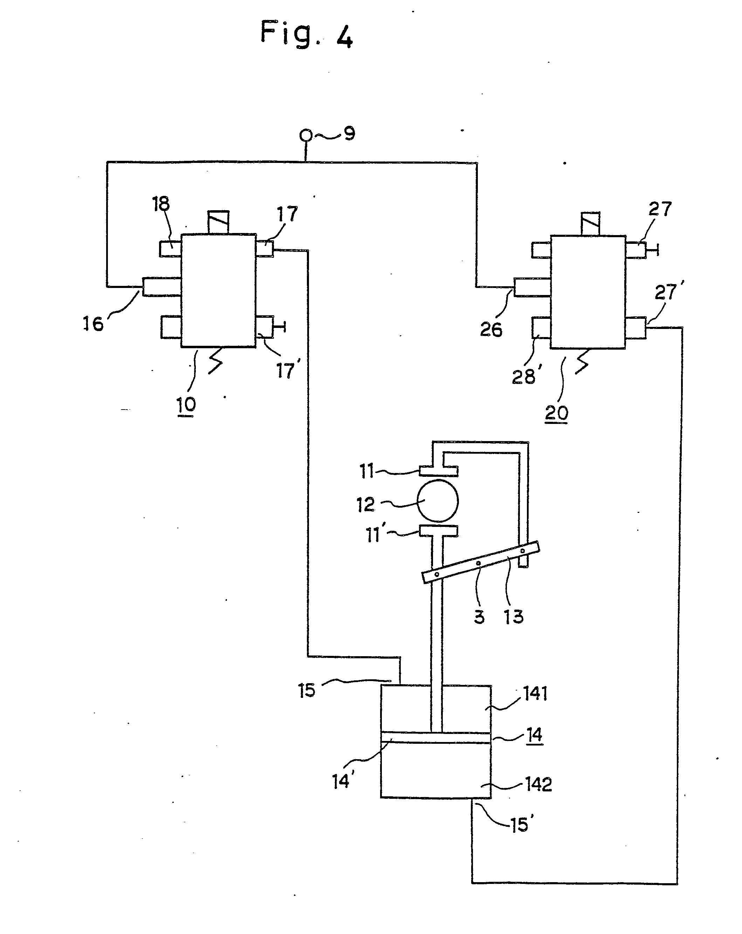

Referring to Fig. 4, a working fluid pressure source 9 is connected with the inlet 16 of a first 2-position, 5-port type single solenoid electromagnetic valve 10 and also with the inlet 26 of a second 2-position, 5-port type single solenoid electromagnetic valve 20. The inlet 16 of the valve 10 is connected with an outlet 17 when its solenoid is in the ON position, and the inlet 16 of the valve 10 is connected with an outlet 17′ when the solenoid is in the OFF position.

In contrast, the inlet 26 of the valve 20 is connected with an outlet 27 when its solenoid is in the ON position, and the inlet 26 of the valve 20 connected with an outlet 27′ when the solenoid is in the OFF position. The outlet 17 of the valve 10 is connected with a vent port 18 when the solenoid 10 is in the OFF position and the outlet 27′ of the valve 20 is connected with a vent port 28′ when the solenoid 20 is in the ON position. A first chamber 141 of the double acting cylinder 14 is connected with the outlet 17 of the valve 10 through an inlet 15 and the other chamber 142 is connected with the outlet 27′ through an inlet 15′.

This structure allows a piston 14′ of the double acting cylinder 14 to be moved by operation of the solenoids of the aforementioned electromagnetic valves. The motion of the piston 14′ in the double acting cylinder 14 is transmitted through a link 13 to open or close the fingers 11 and′, allowing the robot hand to grip or release an object 12.

The following table shows the functions of operation of the robot hand.

| Solenoid of 1st valve | Solenoid of 2nd valve | Movement of piston 14 | Position of fingers |
|---|---|---|---|
| OFF | OFF | Upward | Closed |
| ON | ON | Downward | Open |
| ON | OFF | Stays at an arbitrarily selected intermediate position. | Intermediate |

In the event that the supply of electromagnetic power is terminated, both electromagnetic valves 10 and 20 are brought to the OFF position. Thus, the fingers 11 and 11' are brought to a closed position. Accordingly, in the event of an electric power failure, the robot hand is allowed to keep holding an object, regardless of the size of the object.

In other words, a robot hand in accordance with this invention operates to shift the fingers to a safer position in response to a termination of electric power supply.

## Claim

A robot hand having a plurality of fingers (1, 1') driven by a double acting cylinder (14), a first chamber (141) of which is pressurized to open the fingers and a second chamber (142) of which is pressurized to close the fingers, the cylinder being supplied with working fluid through two independent 2-position 5-port type single solenoid electromagnetic valves (10, 20) and a working fluid pressure source (9) connected with the inlets of the first (10) and second (20) electromagnetic valve, characterized in that an outlet (17) of a first (10) of the electromagnetic valves which is connected with the inlet (16) thereof when its solenoid is in the ON position, is connected with the inlet (15) of the first chamber (141) of the double acting cylinder; an outlet (27') of the second (20) of the electromagnetic valves which is connected with the inlet (26) thereof when its solenoid is in the OFF position, is connected with the second chamber (142) of the double acting cylinder; an outlet (17') of the first electromagnetic valve (10), which is connected with the inlet (16) thereof when its solenoid is in the OFF position, is closed; and in that an outlet (27) of the second electromagnetic valve (20), which is connected with the inlet (26) thereof when its solenoid is in the ON position, is closed.

## Revendication

Main de robot comprenant une pluralité de doigts (1, 1') entraînés par un cylindre à double action (14), une première chambre (141) de ce cylindre qui est pressurisée pour ouvrir les doigts et une seconde chambre (142) de ce cylindre qui es pressurisée pour fermer les doigts, le cylindre étant alimenté en fluide de travail par l'intermédiaire de deux vannes électromagnétiques (10, 20) indépendantes à un seul solénoïde, du type à deux positions et cinq ouvertures, et une source (9) de fluide de travail sous pression reliée aux entrées de la première (10) et de la seconde (20) des vannes électromagnétiques, caractérisée par le fait qu'une sortie (17) d'une première (10) des vannes électromagnétiques qui est reliée à l'entrée (16) de cette même vanne quand son solénoïde est dans la position MARCHE, est connectée à l'entrée (15) de la première chambre (141) du cylindre à double action, qu'une sortie (27') de la seconde vanne (20) des vannes électromagnétiques qui est connectée à l'entrée (26) de cette même vanne quand son solénoïde est dans la position ARRET, est reliée à la seconde chambre (142) du sylindre à double action; qu'une sortie (17') de la première vanne électromagnétique (10) qui est reliée à l'entrée de cette même vanne (16) quand son solénoïde est en position ARRET, est fermée; et par le fait qu'une sortie (27) de la seconde vanne électromagnétique (20) qui est reliée à l'entrée (26) de cette même vanne quand son solénoïde est dans la position MARCHE, est fermée.

## Patentanspruch

1. Eine Roboterhand mit einer Mehrzahl durch einen doppelt wirkenden Zylinder getriebener Finger (1, 1'), wobei eine erste Kammer (141) des Zylinders zum Öffnen der Finger und eine zweite Kammer (142) desselben zum Schließen der Finger druckbeaufschlagt und dem Zylinder Be-triebsfluid über zwei unabhängige Elektro-magnetventile (10, 20) der Bauart mit 2 Positionen und 5 Anschlüssen sowie mit Einzelsolenoid und eine Betriebsfluiddruckquelle (9), die mit dem Eingängen des ersten (10) und zweiten (20) Elektromagnetventils verbunden ist zugeführt wird, dadurch gekennzeichnet, daß ein Ausgang (17) eines ersten (10) der Elektromagnetventile, der mit dem Eingang (16) desselben bei EIN-Position seines Solenoids verbunden ist, mit dem Eingang (15) der ersten Kammer (141) des doppelt wirkenden Zylinders verbunden wird; ein Ausgang (27') des zweiten (20) der Elektromagnetventile, der mit dem Eingang (26) desselben bei AUS-Position seines Solenoids verbunden ist, mit der zweiten Kammer (142) des doppelt wirkenden Zylinders verbunden wird; ein Ausgang (17') des ersten Elektromagnetventils (10), der mit dem Eingang (16) desselben bei AUS-Position seines Solenoids verbunden ist, geschlossen wird; und daß ein Ausgang (27) des zweiten Elektromagnetventils (20), der mit dem Eingang (26) desselben bei EIN-Position seines Solenoids verbunden ist, geschlossen wird.

# Fig. 1

# Fig. 2

(a) ON                    (b) OFF

# Fig. 3

# Fig. 4